# EUROPEAN PATENT APPLICATION

(11) **EP 2 887 592 A1**
(43) Date of publication of application: **24.06.2015**
(21) Application number: 13832793.7
(22) Date of filing: 19.08.2013
(51) Int. Cl.: H04L 12/70

(54) **ENUM-DNS DISASTER RECOVERY METHOD AND SYSTEM IN IMS NETWORK**

(30) Priority: 03.09.2012 CN 201210321499
(71) Applicant: ZTE Corporation, Shenzhen, Guangdong 518057 (CN)
(72) Inventor: FAN, Xiansen, Shenzhen Guangdong 518057 (CN); WU, Limei, Shenzhen Guangdong 518057 (CN); OUYANG, Xinzhi, Shenzhen Guangdong 518057 (CN)
(74) Representative: Benson, Christopher
(86) International application number: PCT/CN2013/081759
(87) International publication number: WO 2014/032532

(57) **Abstract**

Disclosed is an ENUM-DNS disaster recovery method in an IMS network, comprising: a main register/de-register process module periodically synchronizing the data in a local database to a backup register/de-register process module; and also comprising: during the running process of the system, when the main register/de-register process module has failed, the backup register/ de-register process module executing a data synchronization operation and substituting for the main register/de-register process module to work; after the main register/de-register process module has been recovered to normal, the backup register/de-register process module synchronizing the data in a local database to the main register/de-register process module; and the main register/deregister process module executing a data synchronization operation and substituting for the backup register/de-register process module to work. Also disclosed at the same time is an ENUM-DNS disaster recovery system in an IMS network and a server. The adoption of the method, system and server can avoid the problem of losing data during the alternate running process of ENUM-DNS servers in a main and backup machine room, so as to improve the reliability of service.

## Description

### TECHNICAL FIELD

The disclosure relates to disaster recovery in an IP Multimedia Subsystem (IMS) network, and in particular to a method and system for Telephone Number Mapping working group (ENUM) -Domain Name System (DNS) disaster recovery in an IMS network.

### BACKGROUND

IMS is a brand-new multimedia service currently capable of meeting newer, more diverse multimedia service demands of terminal users. An IMS user may be a general mobile user, or a soft terminal with a specific number.

An ENUM-DNS server may provide IMS with a service for querying correspondence between a telephone number, a domain name, and a host resource, and plays an important role in a telecommunication service. An account opening/closing process module of an ENUM-DNS server is responsible for processing an account opening/closing message issued by a telecommunication service supporting system. An account opening/closing process module stores account opening and closing data in a temporary table in a sybase database. A service foreground module regularly checks data in the temporary table in the sybase database, and notifies a service background module of the ENUM-DNS server to load data. The service background module stores the data for client query. Without a disaster recovery mechanism, once the account opening/closing process module fails, the telecommunication service supporting system may issue no account opening/closing message to the account opening/closing process module, which will bring immeasurable economic loss.

To solve such a problem, according to an existing solution, for example, a primary ENUM-DNS server and a backup ENUM-DNS server are set, each provided with a service background module, an account opening/closing process module, a database, and a service foreground module. The primary ENUM-DNS server is in a primary room. The backup ENUM-DNS server is in a backup room. By default, the ENUM-DNS server in the primary room performs service operation with the telecommunication service supporting system. When the ENUM-DNS server in the primary room fails, the ENUM-DNS server in the backup room works in place of the ENUM-DNS server in the primary room to ensure service continuity. When the ENUM-DNS server in the primary room has recovered from the failure, work is continued by the ENUM-DNS server in the primary room. However, some data will be lost as ENUM-DNS servers in the primary room and in the backup room run in turn, impacting a telecommunication service by lowering reliability.

### SUMMARY

In view of this, embodiments of the disclosure provide a method and system for ENUM-DNS disaster recovery in an IMS network, capable of avoiding data loss during alternative running of ENUM-DNS servers in a primary room and a backup room, thereby increasing service reliability.

To this end, a technical solution according to an embodiment herein may be implemented as follows.

A method for Telephone Number Mapping working group ENUM-Domain Name System DNS disaster recovery in an IP Multimedia Subsystem IMS network, includes: periodically updating, by a primary account opening/closing process module, a backup account opening/closing process module with data in a local database;
during system operation, when a failure occurs at the primary account opening/closing process module, executing, by the backup account opening/closing process module, data synchronization, and working in place of the primary account opening/closing process module;
after the primary account opening/closing process module has recovered from the failure, updating, by the backup account opening/closing process module, the primary account opening/closing process module with data in a local database; and executing, by the primary account opening/closing process module, data synchronization, and working in place of the backup account opening/closing process module.

The primary account opening/closing process module may periodically update the backup account opening/closing process module with the data in the local database by:
setting a regular backup script on machinery including a sybase database of an ENUM-DNS server in a primary room, the script periodically backing up data in the sybase database in a fixed directory:
   periodically reading, by the primary account opening/closing process module, a serial number of a zone in a domain name table from a sybase database corresponding to the primary account opening/closing process module, and writing the read serial number in a binary file in a local fixed directory;
   setting, by the primary account opening/closing process module, a File Transfer Protocol FTP script for periodically transferring the binary file in the fixed directory of the ENUM-DNS server in the primary room to a fixed directory of the backup account opening/closing process module via FTP.

A present account opening/closing process module may execute data synchronization by:
reading a binary file in a local fixed directory, and acquiring a serial number of a zone in a sybase database corresponding to the other account opening/closing process module;
querying a serial number of a zone in a sybase database corresponding to the present account opening/closing process module;
comparing the serial number corresponding to the present account opening/closing process module and the serial number corresponding to the other account opening/closing process module, ending data synchronization when the serial number corresponding to the present account opening/closing process module is no less than the serial number corresponding to the other account opening/closing process module, otherwise importing a backup file in the sybase database corresponding to the other account opening/closing process module in the fixed directory into the local sybase database when the serial number corresponding to the present account opening/closing process module is less than the serial number corresponding to the other account opening/closing process module.

The present account opening/closing process module may be the primary account opening/closing process module or the backup account opening/closing process module.

The method may further include:
determining, by the backup account opening/closing process module, a failure or recovery state of the primary account opening/closing process module via a HyperText Transfer Protocol HTTP heartbeat message with the primary account opening/closing process module.

The backup account opening/closing process module may determine that a failure has occurred at the primary account opening/closing process module by:
regularly sending the primary account opening/closing process module an HTTP heartbeat request, and determining that a failure occurs at the primary account opening/closing process module when a reception listening port of the backup account opening/closing process module is closed and no HTTP heartbeat response of the primary account opening/closing process module is received n times in a row. The n is a positive integer.

The backup account opening/closing process module may determine that the primary account opening/closing process module has recovered from a failure by:
regularly sending the primary account opening/closing process module an HTTP heartbeat request, and determining that the primary account opening/closing process module has recovered from the failure when the backup account opening/closing process module has received an HTTP heartbeat response returned by the primary account opening/closing process module and a reception listening port of the backup account opening/closing process module is open.

A system for Telephone Number Mapping working group ENUM-Domain Name System DNS disaster recovery in an IP Multimedia Subsystem IMS network, includes a primary account opening/closing process module and a backup account opening/closing process module.

The primary account opening/closing process module is configured for: periodically updating the backup account opening/closing process module with data in a local database; after recovering from a failure, executing data synchronization, and working in place of the backup account opening/closing process module.

The backup account opening/closing process module is configured for: during system operation, when a failure occurs at the primary account opening/closing process module, executing data synchronization, and working in place of the primary account opening/closing process module; after the primary account opening/closing process module has recovered from the failure, updating the primary account opening/closing process module with data in a local database.

The backup account opening/closing process module may be further configured for: determining a failure or recovery state of the primary account opening/closing process module via a HyperText Transfer Protocol HTTP heartbeat message with the primary account opening/closing process module.

The primary account opening/closing process module may be further configured for: communicating with the backup account opening/closing process module via an HTTP heartbeat message.

A Telephone Number Mapping working group ENUM-Domain Name System DNS server may include an account opening/closing process module configured for: periodically updating an account opening/closing process module in another ENUM-DNS server with data in a local database; after the account opening/closing process module in the ENUM-DNS server has recovered from a failure, executing data synchronization, and working in place of the account opening/closing process module in the another ENUM-DNS server.

The account opening/closing process module in the ENUM-DNS server may be further configured for: communicating with the account opening/closing process module in the another ENUM-DNS server via a HyperText Transfer Protocol HTTP heartbeat message.

A Telephone Number Mapping working group ENUM-Domain Name System DNS server may include an account opening/closing process module configured for: during system operation, when a failure occurs at an account opening/closing process module in another ENUM-DNS server, executing data synchronization, and working in place of the account opening/closing process module in the another ENUM-DNS server; after the account opening/closing process module in the another ENUM-DNS server has recovered from the failure, updating the account opening/closing process module in the another ENUM-DNS server with data in a local database.

The account opening/closing process module in the ENUM-DNS server may be further configured for: determining a failure or recovery state of the account opening/closing process module in the another ENUM-DNS server via a HyperText Transfer Protocol HTTP heartbeat message with the account opening/closing process module in the another ENUM-DNS server.

With a method and system for ENUM-DNS disaster recovery in an IMS network according to an embodiment herein, a primary account opening/closing process module periodically updates a backup account opening/closing process module with data in a local database; during system operation, when a failure occurs at the primary account opening/closing process module, the backup account opening/closing process module executes data synchronization, and then works in place of the primary account opening/closing process module; after the primary account opening/closing process module has recovered from the failure, the backup account opening/closing process module updates the primary account opening/closing process module with data in a local database; the primary account opening/closing process module executes data synchronization, and then works in place of the backup account opening/closing process module. In an embodiment herein, whenever a failure occurs at the primary account opening/closing process module or the primary account opening/closing process module has recovered from a failure, the backup account opening/closing process module or the primary account opening/closing process module will execute data synchronization to ensure that the account opening/closing message in the currently running ENUM-DNS server is the latest, thus avoiding data loss during alternative running of ENUM-DNS servers in a primary room and a backup room, thereby increasing service reliability.

The backup account opening/closing process module may determine a failure or recovery state of the primary account opening/closing process module via a heartbeat message with the primary account opening/closing process module. With the heartbeat mechanism, it is possible to determine occurrence and removal of a failure at a primary account opening/closing process module in time, and thus remove the failure in time, ensuring smoothness of a telecommunication service.

### BRIEF DESCRIPTION OF THE DRAWINGS

Fig.1 is a flowchart of a method for ENUM-DNS disaster recovery in an IMS network according to an embodiment herein.
Fig.2 is a flowchart of data synchronization according to an embodiment herein.
Fig.3 is a flowchart of the method when a failure occurs at a primary account opening/closing process module according to an embodiment herein.
Fig.4 is a flowchart of the method when the primary account opening/closing process module has recovered from the failure according to an embodiment herein.
Fig.5 is a diagram of a structure of a system for ENUM-DNS disaster recovery in an IMS network according to an embodiment herein.
Fig.6 is a diagram of a structure of an ENUM-DNS server according to an embodiment herein.
Fig.7 is a diagram of a structure of an ENUM-DNS server according to an embodiment herein.

### DETAILED DESCRIPTION

In an embodiment herein, a primary account opening/closing process module periodically updates a backup account opening/closing process module with data in a local database; during system operation, when a failure occurs at the primary account opening/closing process module, the backup account opening/closing process module executes data synchronization, and then works in place of the primary account opening/closing process module; after the primary account opening/closing process module has recovered from the failure, the backup account opening/closing process module updates the primary account opening/closing process module with data in a local database; the primary account opening/closing process module executes data synchronization, and then works in place of the backup account opening/closing process module.

In an embodiment herein, the primary account opening/closing process module may be: the account opening/closing process module of an ENUM-DNS server in a primary room; the backup account opening/closing process module may be: the account opening/closing process module of an ENUM-DNS server in a backup room.

The backup account opening/closing process module may determine a failure or recovery state of the primary account opening/closing process module via a heartbeat message with the primary account opening/closing process module.

The disclosure is elaborated below with reference to drawings and embodiments.

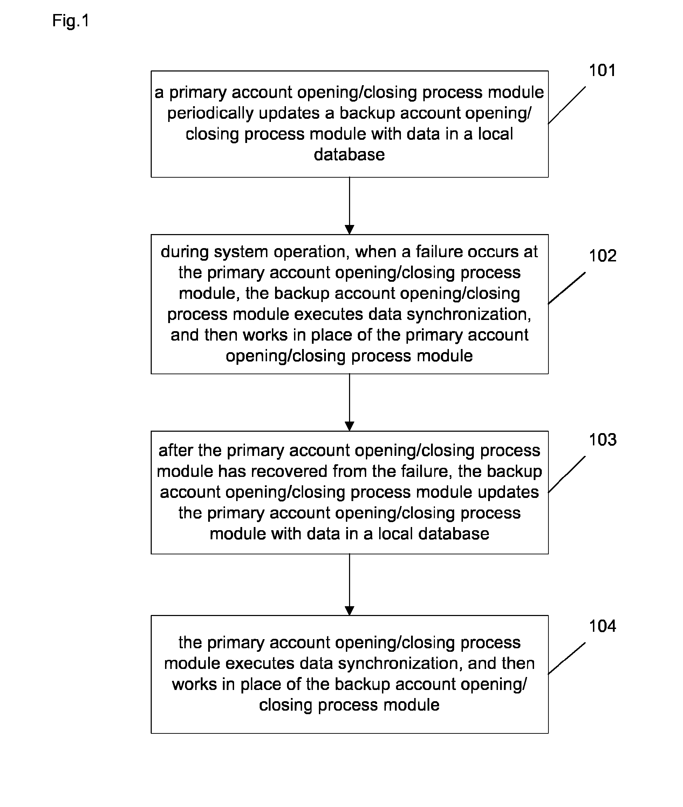

Fig.1 is a flowchart of a method for ENUM-DNS disaster recovery in an IMS network according to an embodiment herein. As shown in Fig.1, the method may include steps as follows.

In step 101, a primary account opening/closing process module periodically updates a backup account opening/closing process module with data in a local database.

A regular backup script may be set on machinery including the sybase database of the ENUM-DNS server in the primary room. The script may back up data (such as 4 main tables) in the sybase database in a fixed directory using a bcp command periodically (every day at 1 AM, for example). The 4 main tables may include: an Id table (eds_identity), a domain name table (zone table), a number formal table (exist_res), and a parameter table (net_param_conf). The primary account opening/closing process module may periodically ( every day at 1 AM, for example) read a serial number of a zone in the domain name table from the sybase database corresponding to the primary account opening/closing process module, and write the read serial number in a binary file in a local fixed directory. The primary account opening/closing process module may set a File Transfer Protocol (FTP) script to periodically transfer the binary file in the fixed directory of the ENUM-DNS server in the primary room to a fixed directory of the backup account opening/closing process module via FTP.

In step 102, during system operation, when a failure occurs at the primary account opening/closing process module, the backup account opening/closing process module executes data synchronization, and then works in place of the primary account opening/closing process module.

The primary and the backup account opening/closing process modules may determine which one of the two modules does the work via a heartbeat mechanism. It is ensured, via a heartbeat message between the primary and the backup account opening/closing process modules, that at the same time only the primary account opening/closing process module or the backup account opening/closing process module opens an account opening/closing reception listening port. The account opening/closing process module at one side automatically opens a local reception listening port once finding out that the reception listening port of the account opening/closing process module at the other side is not monitoring. This may be implemented as follows.

The backup account opening/closing process module may send the primary account opening/closing process module a HyperText Transfer Protocol HTTP heartbeat request regularly (every 3 minutes, for example). The primary account opening/closing process module may send an HTTP heartbeat response after receiving the heartbeat request. The backup account opening/closing process module may determine that a failure occurs at the primary account opening/closing process module when the reception listening port of the backup account opening/closing process module is closed and the backup account opening/closing process module receives no HTTP heartbeat response from the primary account opening/closing process module n times in a row. The n is a positive integer and may be 3. The backup account opening/closing process module will open the local reception listening port. It may be determined whether a reception listening port is closed according to an identifier.

By default, the reception listening port of the primary account opening/closing process module may be open. By default, when the backup account opening/closing process module starts up, the reception listening port thereof may be closed. Otherwise, the reception listening port of the backup account opening/closing process module may be configured the same as that of the primary account opening/closing process module.

In step 103, after the primary account opening/closing process module has recovered from the failure, the backup account opening/closing process module updates the primary account opening/closing process module with data in a local database.

The backup account opening/closing process module may determine that the primary account opening/closing process module has returned to normal when the reception listening port of the backup account opening/closing process module is open and has received a heartbeat response sent by the primary account opening/closing process module. The backup account opening/closing process module may export 4 main tables in the sybase database in the ENUM-DNS server in the backup room to a fixed directory to generate a binary file, and transfer the binary file to a fixed directory for the primary account opening/closing process module via FTP.

In step 104, the primary account opening/closing process module executes data synchronization, and then works in place of the backup account opening/closing process module.

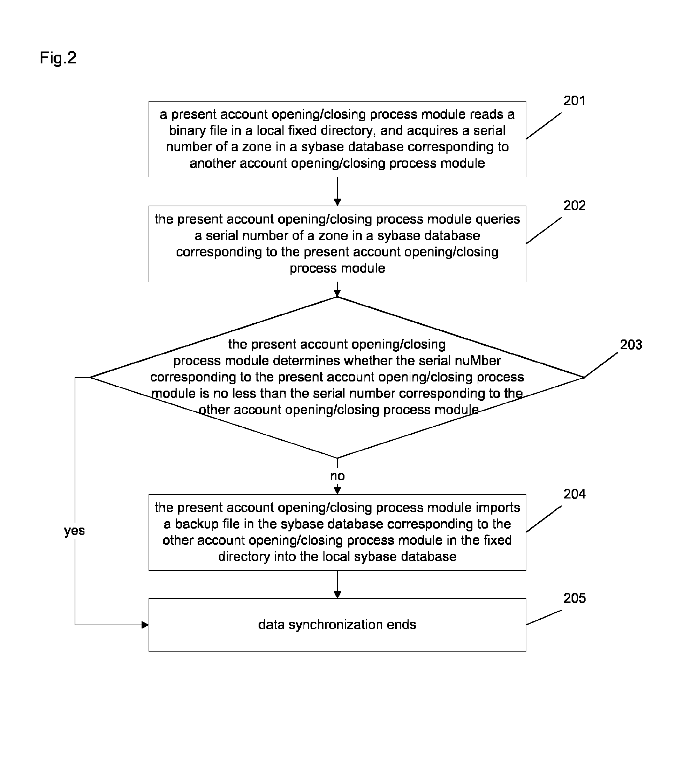

Data synchronization in step 102 and step 104, as shown in Fig.2, may include steps as follows.

In step 201, a present account opening/closing process module reads a binary file in a local fixed directory, and acquires a serial number of a zone in a sybase database corresponding to another account opening/closing process module.

When the reading fails, current data synchronization ends by executing step 205.

In step 202, the present account opening/closing process module queries a serial number of a zone in a sybase database corresponding to the present account opening/closing process module.

When the querying fails, current data synchronization ends by executing step 205.

In step 203, the present account opening/closing process module determines whether the serial number corresponding to the present account opening/closing process module is no less than the serial number corresponding to the other account opening/closing process module. When the serial number corresponding to the present account opening/closing process module is no less than the serial number corresponding to the other account opening/closing process module, step 205 is executed; otherwise step 204 is executed when the serial number corresponding to the present account opening/closing process module is less than the serial number corresponding to the other account opening/closing process module.

When the serial number corresponding to the present account opening/closing process module is no less than the serial number corresponding to the other account opening/closing process module, it means that the account opening/closing message in the present account opening/closing process module is the latest, that is, newer than the account opening/closing message in the other account opening/closing process module; otherwise it means that the account opening/closing message in the present account opening/closing process module has to be updated.

In step 204, the present account opening/closing process module imports a backup file in the sybase database corresponding to the other account opening/closing process module in the fixed directory into the local sybase database; then step 205 is executed.

The backup file may be the backup file of 4 main tables.

In step 205, data synchronization ends.

In the flow, the present account opening/closing process module may be the primary account opening/closing process module or the backup account opening/closing process module. In step 102, the present account opening/closing process module may be the backup account opening/closing process module. In step 104, the present account opening/closing process module may be the primary account opening/closing process module.

The method herein is elaborated below with specific embodiments.

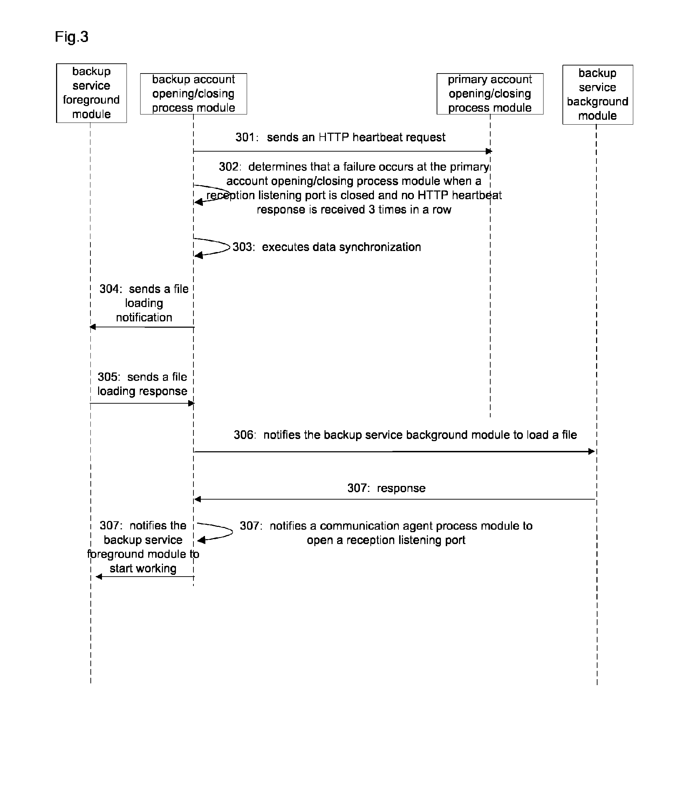

Fig.3 is a flowchart of the method when a failure occurs at a primary account opening/closing process module according to an embodiment herein. As shown in Fig.3, the flow may include steps as follows.

In step 301, the backup account opening/closing process module sends the primary account opening/closing process module an HTTP heartbeat request.

In step 302, the backup account opening/closing process module determines that a failure occurs at the primary account opening/closing process module when the reception listening port of the backup account opening/closing process module is closed and no heartbeat response is received 3 times in a row.

In step 303, the backup account opening/closing process module executes data synchronization.

In step 304, after executing data synchronization successfully, the backup account opening/closing process module sends the backup service foreground module a file loading notification.

In step 305, the backup service foreground module sends the backup account opening/closing process module a file loading response.

In step 306, when the backup service foreground returns a successfully loaded response, the backup account opening/closing process module notifies the backup service background module to load a file.

In step 307: the backup account opening/closing process module receives a response from the backup service background module; when the loading succeeds, notifies a communication agent process module to open a reception listening port, and notifies the backup service foreground module to start working; the backup account opening/closing process module starts account opening/closing message receiving.

In case there is a failure in step 304-step 307, the backup account opening/closing process module may send a warning module a warning message and then the flow ends.

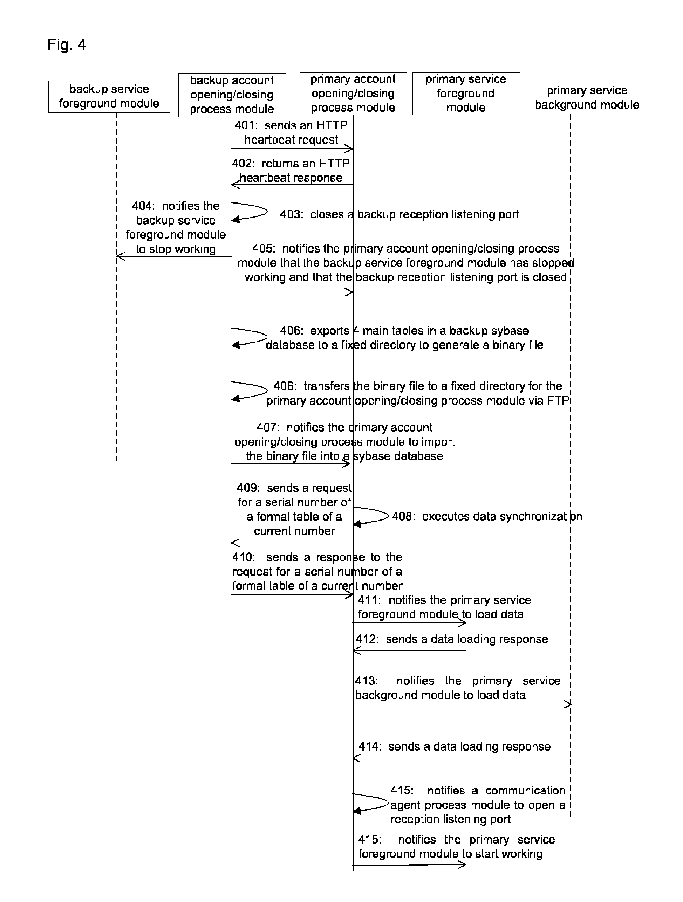

Fig.4 is a flowchart of the method when the primary account opening/closing process module has recovered from the failure according to an embodiment herein. As shown in Fig.4, the flow may include steps as follows.

In step 401, the backup account opening/closing process module sends the primary account opening/closing process module an HTTP heartbeat request.

In step 402, when the backup account opening/closing process module has received an HTTP heartbeat response returned by the primary account opening/closing process module and the reception listening port of the backup account opening/closing process module is open, the backup account opening/closing process module may determine that the primary account opening/closing process module has recovered from the failure.

In step 403, the backup account opening/closing process module may close the backup reception listening port.

In step 404, the backup account opening/closing process module may notify the local service foreground module, that is, the backup service foreground module, to stop working.

In step 405, the backup account opening/closing process module may notify the primary account opening/closing process module that the backup service foreground module has stopped working and that the backup reception listening port is closed.

In step 406, the backup account opening/closing process module may export 4 main tables in the backup sybase database to a fixed directory to generate a binary file, and transfer the binary file to a fixed directory for the primary account opening/closing process module via FTP.

In step 407, the backup account opening/closing process module may notify the primary account opening/closing process module to import the binary file into a sybase database.

In step 408, the primary account opening/closing process module may execute data synchronization.

In step 409, the primary account opening/closing process module may send the backup account opening/closing process module a request for a serial number of a formal table (exist_res) of a current number.

The primary account opening/closing process module acquires a serial number of current exist_res from the backup account opening/closing process module so as to ensure that data in the primary account opening/closing process module is the latest.

In step 410, the backup account opening/closing process module may send the primary account opening/closing process module a response to the request for a serial number of current exist_res.

When the step succeeds, the response may include an exist_res serial number sent by the backup account opening/closing process module.

In step 411, the primary account opening/closing process module may notify the local service foreground module, that is, the primary service foreground module, to load data.

In step 412, the primary service foreground module may send the primary account opening/closing process module a data loading response.

In step 413, when the data loading is successfully, the primary account opening/closing process module may notify the local service background module, that is, the primary service background module, to load data.

In step 414, the primary service background module may send the primary account opening/closing process module a data loading response.

In step 415, when the primary service background module loads data successfully, the primary account opening/closing process module may notify a communication agent process module to open a reception listening port, and notify the primary service foreground module to start working to get ready to receive an account opening/closing message.

When step 410 fails, the primary account opening/closing process module may send a warning module a warning, and the flow may go to step 411; when step 413 or 414 fails, the flow ends.

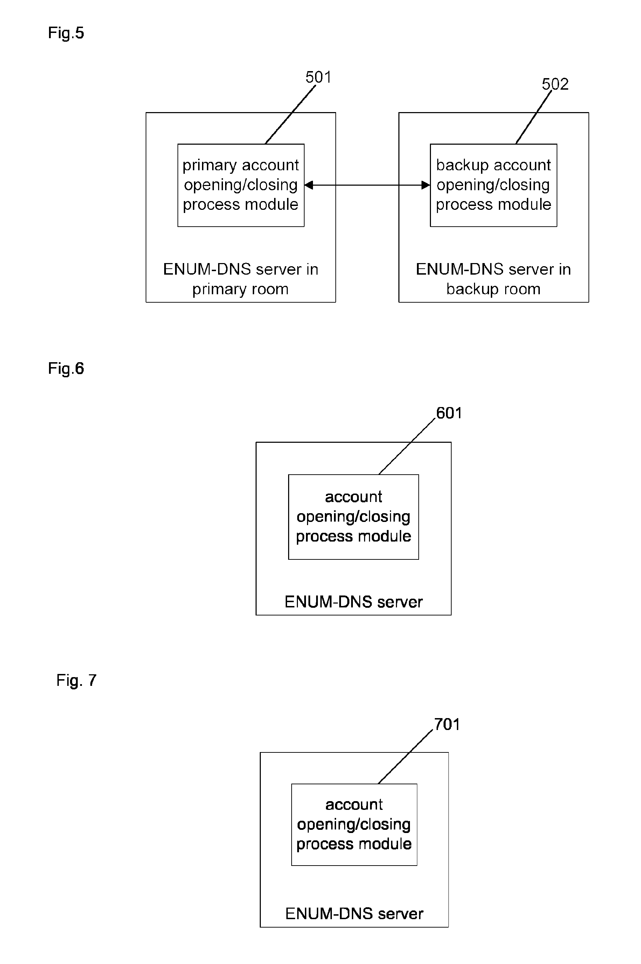

To implement the method, an embodiment herein may further provide a system for ENUM-DNS disaster recovery in an IMS network. As shown in Fig.5, the system may include: a primary account opening/closing process module 501 set in an ENUM-DNS server in a primary room; and a backup account opening/closing process module 502 set in a ENUM-DNS server in a backup room.

The primary account opening/closing process module 501 may be implemented using an Integrated Circuit module such as a process processor, and may be configured for: periodically updating the backup account opening/closing process module 502 with data in a local database; after recovering from a failure, executing data synchronization, and working in place of the backup account opening/closing process module 502.

The backup account opening/closing process module 502 may be implemented using an Integrated Circuit module such as a process processor, and may be configured for: during system operation, when a failure occurs at the primary account opening/closing process module, executing data synchronization, and working in place of the primary account opening/closing process module 501; after the primary account opening/closing process module 501 has recovered from the failure, updating the primary account opening/closing process module 501 with data in a local database.

The backup account opening/closing process module 502 may further be configured for: determining a failure or recovery state of the primary account opening/closing process module 501 via an HTTP heartbeat message with the primary account opening/closing process module 501.

The primary account opening/closing process module 501 may further be configured for: communicating with the backup account opening/closing process module 502 via an HTTP heartbeat message.

An embodiment herein may further provide an ENUM-DNS server. As shown in Fig.6, the ENUM-DNS server may include an account opening/closing process module 601, which may be implemented using an Integrated Circuit module such as a process processor, and may be configured for: periodically updating an account opening/closing process module in another ENUM-DNS server with data in a local database; after the account opening/closing process module in the ENUM-DNS server has recovered from a failure, executing data synchronization, and working in place of the account opening/closing process module in the another ENUM-DNS server.

The account opening/closing process module 601 in the ENUM-DNS server may further be configured for: communicating with the account opening/closing process module in the another ENUM-DNS server via a HyperText Transfer Protocol HTTP heartbeat message.

An embodiment herein may further provide an ENUM-DNS server. As shown in Fig.7, the ENUM-DNS server may include an account opening/closing process module 701, which may be implemented using an Integrated Circuit module such as a process processor, and may be configured for: during system operation, when a failure occurs at an account opening/closing process module in another ENUM-DNS server, executing data synchronization, and working in place of the account opening/closing process module in the another ENUM-DNS server; after the account opening/closing process module in the another ENUM-DNS server has recovered from the failure, updating the account opening/closing process module in the another ENUM-DNS server with data in a local database.

The account opening/closing process module in the ENUM-DNS server 701 may further be configured for: determining a failure or recovery state of the account opening/closing process module in the another ENUM-DNS server via a HyperText Transfer Protocol HTTP heartbeat message with the account opening/closing process module in the another ENUM-DNS server.

What described are merely embodiments of the disclosure and are not intended to limit the scope of the disclosure.

## Claims

1. A method for Telephone Number Mapping working group ENUM-Domain Name System DNS disaster recovery in an IP Multimedia Subsystem IMS network, comprising: periodically updating, by a primary account opening/closing process module, a backup account opening/closing process module with data in a local database;
during system operation, when a failure occurs at the primary account opening/closing process module, executing, by the backup account opening/closing process module, data synchronization, and working in place of the primary account opening/closing process module;
after the primary account opening/closing process module has recovered from the failure, updating, by the backup account opening/closing process module, the primary account opening/closing process module with data in a local database; and executing, by the primary account opening/closing process module, data synchronization, and working in place of the backup account opening/closing process module.

2. The method according to claim 1, wherein the periodically updating, by a primary account opening/closing process module, a backup account opening/closing process module with data in a local database comprises:
setting a regular backup script on machinery comprising a sybase database of an ENUM-DNS server in a primary room, the script periodically backing up data in the sybase database in a fixed directory;
periodically reading, by the primary account opening/closing process module, a serial number of a zone in a domain name table from a sybase database corresponding to the primary account opening/closing process module, and writing the read serial number in a binary file in a local fixed directory;
setting, by the primary account opening/closing process module, a File Transfer Protocol FTP script for periodically transferring the binary file in the fixed directory of the ENUM-DNS server in the primary room to a fixed directory of the backup account opening/closing process module via FTP.

3. The method according to claim 1, wherein a present account opening/closing process module executes data synchronization by:
reading a binary file in a local fixed directory, and acquiring a serial number of a zone in a sybase database corresponding to the other account opening/closing process module;
querying a serial number of a zone in a sybase database corresponding to the present account opening/closing process module;
comparing the serial number corresponding to the present account opening/closing process module and the serial number corresponding to the other account opening/closing process module, ending data synchronization when the serial number corresponding to the present account opening/closing process module is no less than the serial number corresponding to the other account opening/closing process module, otherwise importing a backup file in the sybase database corresponding to the other account opening/closing process module in the fixed directory into the local sybase database when the serial number corresponding to the present account opening/closing process module is less than the serial number corresponding to the other account opening/closing process module,
wherein the present account opening/closing process module is the primary account opening/closing process module or the backup account opening/closing process module.

4. The method according to claim 1, 2, or 3, further comprising:
determining, by the backup account opening/closing process module, a failure or recovery state of the primary account opening/closing process module via a HyperText Transfer Protocol HTTP heartbeat message with the primary account opening/closing process module.

5. The method according to claim 4, wherein the backup account opening/closing process module determines that a failure has occurred at the primary account opening/closing process module by:
regularly sending the primary account opening/closing process module an HTTP heartbeat request, and determining that a failure occurs at the primary account opening/closing process module when a reception listening port of the backup account opening/closing process module is closed and no HTTP heartbeat response of the primary account opening/closing process module is received n times in a row, wherein the n is a positive integer.

6. The method according to claim 4, wherein the backup account opening/closing process module determines that the primary account opening/closing process module has recovered from a failure by:
regularly sending the primary account opening/closing process module an HTTP heartbeat request, and determining that the primary account opening/closing process module has recovered from the failure when the backup account opening/closing process module has received an HTTP heartbeat response returned by the primary account opening/closing process module and a reception listening port of the backup account opening/closing process module is open.

7. A system for Telephone Number Mapping working group ENUM-Domain Name System DNS disaster recovery in an IP Multimedia Subsystem IMS network, comprising a primary account opening/closing process module and a backup account opening/closing process module, wherein
the primary account opening/closing process module is configured for: periodically updating the backup account opening/closing process module with data in a local database; after recovering from a failure, executing data synchronization, and working in place of the backup account opening/closing process module; and
the backup account opening/closing process module is configured for: during system operation, when a failure occurs at the primary account opening/closing process module, executing data synchronization, and working in place of the primary account opening/closing process module; after the primary account opening/closing process module has recovered from the failure, updating the primary account opening/closing process module with data in a local database.

8. The system according to claim 7, wherein
the backup account opening/closing process module is further configured for: determining a failure or recovery state of the primary account opening/closing process module via a HyperText Transfer Protocol HTTP heartbeat message with the primary account opening/closing process module ;
and the primary account opening/closing process module is further configured for: communicating with the backup account opening/closing process module via an HTTP heartbeat message.

9. A Telephone Number Mapping working group ENUM-Domain Name System DNS server, comprising an account opening/closing process module configured for: periodically updating an account opening/closing process module in another ENUM-DNS server with data in a local database; after the account opening/closing process module in the ENUM-DNS server has recovered from a failure, executing data synchronization, and working in place of the account opening/closing process module in the another ENUM-DNS server.

10. The ENUM-DNS server according to claim 9, wherein the account opening/closing process module in the ENUM-DNS server is further configured for: communicating with the account opening/closing process module in the another ENUM-DNS server via a HyperText Transfer Protocol HTTP heartbeat message.

11. A Telephone Number Mapping working group ENUM-Domain Name System DNS server, comprising an account opening/closing process module configured for: during system operation, when a failure occurs at an account opening/closing process module in another ENUM-DNS server, executing data synchronization, and working in place of the account opening/closing process module in the another ENUM-DNS server; after the account opening/closing process module in the another ENUM-DNS server has recovered from the failure, updating the account opening/closing process module in the another ENUM-DNS server with data in a local database.

12. The ENUM-DNS server according to claim 11, wherein the account opening/closing process module in the ENUM-DNS server is further configured for: determining a failure or recovery state of the account opening/closing process module in the another ENUM-DNS server via a HyperText Transfer Protocol HTTP heartbeat message with the account opening/closing process module in the another ENUM-DNS server.
